# EUROPÄISCHE PATENTSCHRIFT

(11) **EP 3 012 655 B1**
(45) Veröffentlichungstag und Bekanntmachung des Hinweises auf die Patenterteilung: **23.12.2020**
(21) Anmeldenummer: 15190582.5
(22) Anmeldetag: 20.10.2015
(51) Int. Cl.: G01S 15/931, G10K 9/22, G01S 7/521

(54) **ULTRASCHALLSENSORVORRICHTUNG FÜR EIN KRAFTFAHRZEUG, ANORDNUNG SOWIE KRAFTFAHRZEUG**
ULTRASOUND SENSOR DEVICE FOR A MOTOR VEHICLE, ASSEMBLY AND MOTOR VEHICLE
DISPOSITIF DE CAPTEUR À ULTRASONS POUR UN VÉHICULE AUTOMOBILE, SYSTÈME, VÉHICULE AUTOMOBILE

(30) Priorität: 21.10.2014 DE 102014115339
(43) Veröffentlichungstag der Anmeldung: 27.04.2016
(73) Patentinhaber: Valeo Schalter und Sensoren GmbH, 74321 Bietigheim-Bissingen (DE); Volkswagen Aktiengesellschaft, 38440 Wolfsburg (DE)
(72) Erfinder: Weber, Natalie, 74321 Bietigheim-Bissingen (DE); Weyland, Jörg, 74321 Bietigheim-Bissingen (DE); Kupfernagel, Uwe, 74321 Bietigheim-Bissingen (DE); Wehling, Hans-Wilhelm, 74321 Bietigheim-Bissingen (DE); Max, Stephan, 38518 Gifhorn (DE); Urban, Alexander, 38518 Gifhorn (DE)
(74) Vertreter: Hofstetter, Schurack & Partner

(56) Entgegenhaltungen:
- EP-A1- 1 801 134
- DE-A1-102011 108 403
- DE-A1-102011 121 095
- DE-A1-102012 014 810
- DE-A1-102012 106 696
- DE-A1-102012 106 697
- DE-A1-102012 200 639

## Beschreibung

Die vorliegende Erfindung betrifft eine Anordnung für ein Kraftfahrzeug mit einer Ultraschallsensorvorrichtung und einem Verkleidungsteil für das Kraftfahrzeug, gemäß Anspruch 1.

Die Erfindung betrifft außerdem ein Kraftfahrzeug mit zumindest einer solchen Anordnung.

Ultraschallsensoren sind in bekannter Weise im Frontbereich und im Heckbereich des Kraftfahrzeugs, insbesondere an Stoßfängern, verbaut. Sie sind Fahrerassistenzsystemen zugeordnet und liefern Informationen über die Umgebung des Kraftfahrzeugs, nämlich über die Abstände zwischen dem Kraftfahrzeug einerseits und den in seiner Umgebung befindlichen Hindernissen andererseits. Derartige Fahrerassistenzsysteme können beispielsweise Parkassistenzsysteme, Systeme zur Totwinkelüberwachung, Systeme zur Abstandshaltung, Bremsassistenzsysteme oder dergleichen sein.

Des Weiteren ist es bereits Stand der Technik, dass derartige Ultraschallsensoren in Stoßfängern unverdeckt und somit sichtbar verbaut werden. Dies bedeutet, dass sie in durchgängigen Aussparungen in dem Stoßfänger angeordnet sind und außenseitig sichtbar sind. Eine topfförmige Membran des Ultraschallsensors erstreckt sich hier durch die durchgängige Aussparung des Stoßfängers hindurch, sodass die Frontseite der Membran, über welche Ultraschallwellen ausgesendet und empfangen werden, bündig mit der äußeren Oberfläche des Stoßfängers abschließt. Diese Ultraschallsensoren haben jedoch den entscheidenden Nachteil, dass sie sichtbar angeordnet sind und somit das gesamte optische Bild des Kraftfahrzeugs beeinträchtigen. Zudem entsteht ein Aufwand, den Aluminiumtopf und einen gegebenenfalls vorhandenen Entkopplungsring zu lackieren.

Deshalb richtet sich das Interesse vorliegend auf verdeckt beziehungsweise versteckt verbaute Ultraschallsensoren, welche bei einer Betrachtung des Stoßfängers von außen nicht sichtbar durch den Stoßfänger abgedeckt sind. Hier befindet sich der Ultraschallsensor an einer Rückseite des Stoßfängers, sodass die Frontseite der Membran - gegebenenfalls über einen zusätzlichen Montagedeckel - mit der Rückseite des Stoßfängers in Anlage gebracht ist. Bei derartig verbauten Ultraschallsensoren direkt hinter dem Stoßfänger werden die Ultraschallsignale durch das Material des Stoßfängers hindurch gesendet und empfangen. Somit schwingt ein Bereich des Stoßfängers zusammen mit der Membran des Ultraschallsensors. Es ist somit oft erforderlich, dass dieser schwingende Bereich des Stoßfängers mit Hilfe eines aus Keramik gebildeten Stabilisierungselements bzw. Dämpfungselements begrenzt wird. Es ist beispielsweise bekannt, ein aus Keramik gebildetes Stabilisierungselement bereitzustellen, welches eine Durchgangsöffnung aufweist, durch welche sich die topfförmige Membran des Ultraschallsensors hindurch erstreckt, sodass das Versteifungselement um die Membran herum angeordnet ist und außerdem - gegebenenfalls über einen Montagedeckel - mit der Rückseite des Stoßfängers in Anlage gebracht ist. Ein derartiges Stabilisierungselement ist beispielsweise in der DE 10 2011 105 017 A1 beschrieben.

Somit sind bei verdeckt hinter dem Stoßfänger verbauten Ultraschallsensoren jedoch wesentlich höhere Anforderungen an die Positionierung, die Klebung und die nun einzuhaltenden Toleranzen gegeben. Der Ultraschallsensor muss hinter dem Stoßfänger mechanisch fest angebracht werden. Dies ist erforderlich, damit der Ultraschallsensor verlustfrei durch den Stoßfänger senden kann. Um die Sende- und Empfangsverluste gering zu halten, muss die Sendefläche des Ultraschallsensors - als die Frontfläche der Membran - mechanisch fest mit dem Stoßfänger verbunden werden oder aber mit einem verlustfreien Koppelelement beziehungsweise Montagedeckel zwischen der Frontseite der Membran und dem Stoßfänger ausgebildet werden. Zudem werden die verdeckt eingebauten Ultraschallsensoren üblicherweise mit einer höheren Sendeleistung betrieben. Um die eingeleiteten Schwingungen lokal zu halten und die Sendecharakteristik zu beeinflussen, wird dann die oben genannte Dämpfungseinrichtung mit einem großen Elastizitätsmodul eng um den Wandler beziehungsweise um die Membran benötigt. Ein solcher Versteifungsring muss mechanisch fest mit dem Stoßfänger verbunden sein.

Ferner ist aus der DE 10 2011 105 046 A1 eine Ultraschallsensorvorrichtung für ein Fahrzeug bekannt. Die Ultraschallsensorvorrichtung umfasst einen Ultraschallsensor und eine den Ultraschallsensor nach hinten abdeckende Kappe, wobei der Ultraschallsensor in einer Halterung angeordnet ist. Die Kappe umgibt die Halterung zur Seite und nach hinten vollständig. Die Kappe kann insbesondere aus einem thermoplastischen Elastomer gebildet sein und kann dazu dienen, den Schalldruck zu dämpfen.

Die WO 2014/016081 A2 beschreibt eine Ultraschallsensorvorrichtung mit einem Ultraschallsensor, der mittels eines Klebemittels an einem metallischen Teil angeordnet ist. Auf der Oberfläche des metallischen Teils um den Ultraschallsensor und das im Wesentlichen ringförmige Dämpfungsteil kann ein schallabsorbierendes und/oder schalldämpfendes Material aufgebracht sein, welches zum Unterdrücken der induzierten Störsignale dient. Vorzugsweise ist das schallabsorbierende und/oder schalldämpfende Material eine klebbare, ein- oder mehrlagige Bitumenschicht. Nach einer weiteren Ausführung kann das schallabsorbierende und/oder schalldämpfende Material auch ein einspritzbares Material, beispielsweise ein Acrylat, ein Kautschuk oder ein Polyepoxid sein.

Des Weiteren beschreibt die DE 10 2012 106 697 A1 eine Ultraschallsensorvorrichtung für ein Kraftfahrzeug, mit einem Ultraschallsensor, welcher eine topfförmige Membran zum Aussenden und/oder Empfangen von Ultraschallsignalen sowie ein Sensorgehäuse aufweist. Zudem umfasst die Ultraschallsensorvorrichtung eine einem Halter, welcher zur Halterung des Sensorgehäuses an einer Rückseite eines Verkleidungsteils des Kraftfahrzeugs ausgebildet ist. Vorzugsweise umfasst die Ultraschallsensorvorrichtung zusätzlich noch eine haubenförmige Abdeckung, welche zur Fixierung des Sensorgehäuses in dem Halter auf diesen Halter aufsteckbar ist. Zwischen einem Boden der Abdeckung und einer von der Membran abgewandten Rückseite des Sensorgehäuses kann eine Dämpfungsscheibe aus einem weich-elastischen Material angeordnet sein.

Aus der DE 10 2012 106 696 A1 ist eine Ultraschallsensorvorrichtung für ein Kraftfahrzeug zu entnehmen. Die Ultraschallsensorvorrichtung umfasst einen Ultraschallsensor, welcher eine topfförmige Membran zum Aussenden und/oder Empfangen von Ultraschallsignalen aufweist. Zudem ist ein Entkopplungsring vorgesehen, welcher um die Membran herum an einem Außenumfang der Membran anliegend angeordnet ist. Zudem kann es vorgesehen sein, dass die Ultraschallsensorvorrichtung einen Halter für den Ultraschallsensor aufweist. Der Halter kann ein Aufnahmeteil mit einer Aufnahme für das Versteifungselement aufweisen. Zwischen einem Boden der Aufnahme und einer dem Ultraschallsensor zugewandten Rückseite des Versteifungselements kann eine Dämpfungsscheibe angeordnet sein, welche zur Dämpfung des Rückschalls ausgebildet ist.

Aus der DE 10 2012 014 810 A1 ist eine Ultraschallsensorvorrichtung mit einem metallischen Teil bekannt, an welchem der Ultraschallsensor mit einem elastischen Klebemittel befestigt ist. Die Vorrichtung weist ein schalldämpfendes Material auf, welches an dem metallischen Teil rückseitig angebracht ist. Des Weiteren ist ein Dämpfungsteil vorgesehen, welches mit einem unelastischen Klebemittel an dem metallischen Teil befestigt ist.

Es ist Aufgabe der vorliegenden Erfindung, eine Lösung aufzuzeigen, wie ein verdeckt eingebauter Ultraschallsensor für ein Kraftfahrzeug zuverlässiger betrieben werden kann.

Diese Aufgabe wird erfindungsgemäß durch eine Anordnung sowie durch ein Kraftfahrzeug mit den Merkmalen gemäß den jeweiligen unabhängigen Patentansprüchen gelöst. Vorteilhafte Weiterbildungen der vorliegenden Erfindung sind Gegenstand der abhängigen Patentansprüche, der Beschreibung und der Figuren.

Eine erfindungsgemäße Anordnung für ein Kraftfahrzeug umfasst eine Ultraschallsensorvorrichtung und ein Verkleidungsteil für das Kraftfahrzeug gemäß Anspruch 1. Die Ultraschallsensorvorrichtung ist für die Montage in einem Kraftfahrzeug vorgesehen. Die Ultraschallsensorvorrichtung ist zur Anordnung bzw. Montage hinter dem Verkleidungsteil des Kraftfahrzeugs ausgelegt. Die Ultraschallsensorvorrichtung umfasst einen Ultraschallsensor zum Aussenden und/oder Empfangen eines Ultraschallsignals. Zudem umfasst die Ultraschallsensorvorrichtung ein Plattendämpfungselement zum Absorbieren und/oder Dämpfen einer in Folge des Ultraschallsignals erzeugten Schwingung, wobei das Plattendämpfungselement in einem Umgebungsbereich des Ultraschallsensors anordenbar ist. Ferner ist der Ultraschallsensor mit dem Verkleidungsteil verbunden. Das Plattendämpfungselement besteht zumindest teilweise aus einem Butylkautschuk. Des Weiteren ist das Plattendämpfungselement auf dem Verkleidungsteil angebracht.

Die Ultraschallsensorvorrichtung umfasst einen Ultraschallsensor der eine Membran umfassen kann, die beispielsweise aus Aluminium gefertigt ist und topfförmig ausgebildet ist. Zum Aussenden des Ultraschallsignals kann die Membran beispielsweise mit einem piezoelektrischen Element zu mechanischen Schwingungen angeregt werden. Dieses piezoelektrische Element kann auch dazu dienen, eine mechanische Schwingung der Membran zu erfasst. Somit kann das Ultraschallsignal, das von dem Ultraschallsensor ausgesendet wurde und von einem Objekt reflektiert wurde, empfangen werden. Die Ultraschallsensorvorrichtung ist insbesondere zum verdeckten Einbau hinter einem Verkleidungsteil, beispielsweise einem Stoßfänger oder einem Karosseriebauteil, des Kraftfahrzeugs ausgebildet. Die Ultraschallsensorvorrichtung kann beispielsweise zerstörungsfrei reversibel lösbar mit dem Verkleidungsteil verbunden werden. In der bestimmungsgemäßen Einbaulage kann die Ultraschallsensorvorrichtung bei Betrachtung des Verkleidungsteils von außen nicht sichtbar sein. Wenn die Ultraschallsensorvorrichtung mit einem Verkleidungsteil des Kraftfahrzeugs verbunden ist, kann das Verkleidungsteil zusammen mit dem Ultraschallsensor bzw. mit der Membran des Ultraschallsensors schwingen. Diese mechanischen Schwingungen bilden sich beispielsweise dann aus, wenn von dem Ultraschallsensor Schallwellen in das Verkleidungsteil eingekoppelt werden. Die Schwingungen des Verkleidungsteils können dazu führen, dass die Ausschwingzeit der Membran, die mit dem Verkleidungsteil verbunden ist, deutlich erhöht wird. Dies kann zur Folge haben, dass der Ultraschallsensor fehlerhafte Messergebnisse liefert. Beispielsweise kann ein sogenanntes Scheinhinderniss erfasst werden.

Das Verkleidungsteil kann beispielsweise durch ein Karosseriebauteil des Kraftfahrzeugs gebildet sein. Der Ultraschallsensor kann insbesondere stoffschlüssig mit dem Verkleidungsteil verbunden sein. Zu diesem Zweck kann der Ultraschallsensor mittels eines entsprechenden Klebstoffs mit dem Verkleidungsteil verbunden werden. Das Stabilisierungselement der Ultraschallsensorvorrichtung kann zudem stoffschlüssig mit dem Verkleidungsteil verbunden sein. Auf diese Weise kann die Ultraschallsensorvorrichtung zuverlässig mit dem Verkleidungsteil verbunden werden.

Zudem ist Plattendämpfungselement mit dem Verkleidungsteil verbunden. Da das Plattendämpfungselement klebend ausgebildet ist, kann es auf einfache Weise mit dem Verkleidungsteil verbunden werden. Es kann auch vorgesehen sein, dass das Plattendämpfungselement mittels eines entsprechenden Klebstoffs mit dem Verkleidungsteil verbunden ist. Das Plattendämpfungselement kann eine mechanische Schwingung des Verkleidungsteils, die in Folge des Ultraschallsignals erzeugt wird, dämpfen und/oder absorbieren. Die Schwingung kann durch das Ultraschallsignal entstehen, welches der Ultraschallsensor aussendet. Die Schwingung kann auch durch das Ultraschallsignal entstehen, welches von dem Ultraschallsensor ausgesendet und von einem Objekt in der Umgebung des Kraftfahrzeugs reflektiert wird. Das Plattendämpfungselement kann nur einen vorbestimmten Bereich des Verkleidungsteils bedecken.

Um Schwingungen, insbesondere Schwingungen des Verkleidungsteils, zu dämpfen und/oder zu absorbieren ist ein Plattendämpfungselement vorgesehen. Das Plattendämpfungselement kann auch dazu ausgelegt sein, Schall zu absorbieren und/oder zu dämpfen. Das Plattendämpfungselement ist aus einem Butylkautschuk gebildet. Dieser Butylkautschuk kann ein Copolymerisat von 95 bis 99 Mol-% Isobuten und 1 bis 5 Mol-% Isopren sein. Das Plattendämpfungselement kann beispielsweise eine Dicke zwischen 0,6 mm und 2 mm aufweisen. Dieses Material weist den Vorteil auf, dass es alterungsbeständig ist und dauerplastisch ist. Der Butylkautschuk kann beispielsweise eine Dichte zwischen 1,32 g/cm³ und 1,36 g/cm³ aufweisen. Das Material ist in Wasser unlöslich und kann einen Feststoffgehalt größer als 99% aufweisen. Das Material kann eine Reißkraft aufweisen, die kleiner oder gleich 70 N / 25 mm ist, und die Reißdehnung des Materials kann etwa 15 % betragen. Das Elastizitätsmodul des Materials kann bei Raumtemperatur in einem Bereich zwischen 100 und 150 MPa liegen. Zudem weist das Material den Vorteil auf, dass es in einem Temperaturbereich zwischen -40° C und 90° C nicht schrumpft, austrocknet oder versprödet. Eine kurzzeitige Erhöhung der Temperatur, die beispielsweise bei einem üblichen Lackeinbrennprozess auftritt, hat auf die Funktionsfähigkeit des Plattendämpfungselements keinen Einfluss. Mit einem derartigen Plattendämpfungselement können Schwingungen zuverlässig gedämpft und/oder absorbiert werden. Somit kann die Ultraschallsensorvorrichtung zuverlässiger betrieben werden.

Bevorzugt ist eine erste Seite und/oder eine der ersten Seite gegenüberliegende, zweite Seite des Plattendämpfungselements adhäsiv ausgebildet. Mit anderen Worten ist das Plattendämpfungselement klebend ausgebildet. Butylkautschuk zeichnet sich insbesondere durch eine ausgeprägte Oberflächenklebrigkeit aus. Zudem weist das Material eine starke Anfangshaftung auf. Ferner weist das Material eine gute Haftung auf Metallen, lackierten Oberflächen, Holz und Kunststoff auf. Ein Plattendämpfungselement, das aus Butylkautschuk gebildet ist, kann somit auf einfache Weise auf einem Verkleidungsteil befestigt werden.

In einer Ausführungsform weist die Ultraschallsensorvorrichtung ein Rückschalldämpfungselement zum Dämpfen von Schall in eine Richtung, welche einer Senderichtung des Ultraschallsensors im Wesentlichen entgegengerichtet ist, auf, wobei das Rückschalldämpfungselement zumindest teilweise aus dem Butylkautschuk besteht. Das Rückschalldämpfungselement kann den Ultraschallsensor bzw. die Membran des Ultraschallsensors zumindest bereichsweise umgeben. Damit der Ultraschallsensor durch das Verkleidungsteil hindurch senden kann, wird üblicherweise die Sendeleistung erhöht. Dies hat beispielsweise zur Folge, dass der Rückschall des Ultraschallsensors zunimmt. Dieser Rückschall, der in eine Richtung ausgesendet wird, die der Senderichtung des Ultraschallsensors im Wesentlichen entgegengerichtet ist, kann Messfehler bzw. fälschlicherweise erfasste Objekte zur Folge haben. Durch das Rückschalldämpfungselement kann dieser Rückschall deutlich reduziert werden.

Weiterhin weist die Ultraschallsensorvorrichtung ein Stabilisierungselement mit einer Durchgangsöffnung auf, wobei eine Membran des Ultraschallsensors zumindest bereichsweise in der Durchgangsöffnung angeordnet ist. Das Stabilisierungselement kann beispielsweise aus Keramik gebildet sein. Das Stabilisierungselement kann ringförmig ausgebildet sein. Das Stabilisierungselement dient insbesondere dazu, wenn die Ultraschallsensorvorrichtung mit einem Verkleidungsteil verbunden ist, eine mechanische Schwingung des Verkleidungsteils zu dämpfen und/oder räumlich zu begrenzen.

In einer weiteren Ausführungsform weist eine Stirnseite des Stabilisierungselements eine vorbestimmte Krümmung auf. Insbesondere weist die Stirnseite des Stabilisierungselements, welche in der bestimmungsgemäßen Einbaulage der Ultraschallsensorvorrichtung dem Verkleidungsteil zugewandt ist, die vorbestimmte Krümmung auf. Das Stabilisierungselement kann konvex ausgebildet sein. In der bestimmungsgemäßen Einbaulage kann zwischen der Stirnseite des Stabilisierungselements und dem Verkleidungsteil eine entsprechende Klebeschicht zum Halten des Stabilisierungselements an dem Verkleidungsteil angeordnet sein. Die Klebeschicht kann auch als Koppelement ausgebildet sein, das zum Dämpfen von Schwingungen oder Schall absorbierend ausgebildet ist. Die Krümmung kann derart ausgebildet sein, dass die Klebeschicht in einem Bereich, welcher der Durchgangsöffnung des Stabilisierungselements zugeordnet ist, eine geringere Schichtdicke aufweist als in einem Bereich, der dem Außenumfang des Stabilisierungselements zugeordnet ist. Auf diese Weise kann erreicht werden, dass in dem Bereich des Außenumfangs eine höhere Dämpfung durch das Koppelelement erreicht wird. Auf diese Weise kann verhindert werden, dass Schwingungen von außen auf den Ultraschallsensor übertragen werden. Zudem kann durch die Formgebung des Stabilisierungsrings die Montage des Stabilisierungsrings an dem Verkleidungsteil, das beispielsweise eine entsprechende Krümmung aufweisen kann, vereinfacht werden. Es kann beispielsweise ein horizontaler Öffnungswinkel erreicht werden, der vergleichbar mit dem von unverdeckten Ultraschallsensoren ist. Ferner kann ein vertikaler Öffnungswinkel erreicht werden, der beispielsweise um 5° geringer ist als der bekannter unverdeckter Ultraschallsensoren. Dies ermöglicht eine niedrigere Einbauposition des Ultraschallsensors, bei welcher keine Bodenechos entstehen.

Bevorzugt weist die Ultraschallsensorvorrichtung ein Halteelement mit einem Aufnahmeschacht auf, in welchem der Ultraschallsensor gehalten ist. Das Halteelement kann einen Aufnahmeschacht aufweisen, in dem der Ultraschallsensor zumindest bereichsweise angeordnet ist. Der Ultraschallsensor kann insbesondere rastend mit dem Halteelement verbunden sein. Somit kann der Ultraschallsensor auf einfache und kostengünstige Weise mit dem Halteelement verbunden werden.

In einer weiteren Ausführungsform weist das Haltelement eine Aufnahme auf und das Rückschalldämpfungselement ist zumindest bereichsweise in der Aufnahme angeordnet. Das Halteelement und Stabilisierungselement können miteinander verbunden sein. Das Halteelement kann mit dem Stabilisierungselement rastend verbunden sein. Das Haleelement kann derart ausgebildet sein, dass sich innerhalb des Halteelements eine Aussparung bzw. die Aufnahme ausbildet. In dieser Aufnahme kann das Rückschalldämpfungselement, insbesondere vollständig, angeordnet sein. Das Rückschalldämpfungselement kann in der Aufnahme gehalten sein. Somit kann auf einfache Weise das Rückschalldämpfungselement in der Ultraschallsensorvorrichtung angeordnet werden.

In einer Ausführungsform umgibt das Plattendämpfungselement den Ultraschallsensor zumindest bereichsweise. Das Plattendämpfungselement kann beispielsweise plattenförmig ausgebildet sein und eine entsprechende Aussparung bzw. Durchgangsöffnung aufweisen, in welcher der Ultraschallsensor angeordnet ist. Somit kann die mechanische Schwingung des Verkleidungsteils um den Ultraschallsensor herum gleichmäßig gedämpft werden.

Weiterhin ist es vorteilhaft, wenn zwischen dem Verkleidungsteil und dem Stabilisierungselement zumindest bereichsweise ein Koppelelement angeordnet ist, das zumindest teilweise aus einem Butylkautschuk besteht. Dieses Koppelelement ist insbesondere selbstklebend ausgebildet. Das Koppelelement dient zum Halten des Stabilisierungselements an dem Verkleidungsteil. Somit kann auf einen Klebstoff verzichtet werden, der beispielsweise bei hohen Temperaturen ausgehärtet werden muss. Die Montage des Ultraschallsensors kann somit unmittelbar nach der Fertigung des Verkleidungsteils erfolgen. Auf diese Weise kann die Montagezeit deutlich reduziert werden. Darüber hinaus kann der Ultraschallsensor beispielsweise in einem Reparaturfall schnell ausgebaut und wieder eingebaut werden. Ferner dient das Koppelelement zur Dämpfung von Schwingungen. Mit dem Kopplungselement kann verhindert werden, dass Schwingungen von dem Verkleidungsteil an den Ultraschallsensor übertragen werden.

In einer Ausgestaltung ist das Verkleidungsteil auf einem Kunststoff gebildet. Das Verkleidungsteil kann beispielsweise ein Stoßfänger oder ein Teil eines Stoßfängers sein. Das Verkleidungsteil kann beispielsweise aus einem Makroblend®-Material gebildet sein. Das Material des Verkleidungsteils kann ein Polycarbonat (PC) und ein Polyethylenterephthalat (PET) umfassen. Das Material kann auch ein Polycarbonat und ein Polybutylenterephthalat (PBT) umfassen. Ein derartiges Material zeichnet sich durch seine geringe innere Dämpfung aus. Insbesondere bei Temperaturen zwischen 30° C und 60° C können die Schwingungen eines Stoßfängers, der aus einem Kunststoff gefertigt ist, deutlich zunehmen. Durch das Plattendämpfungselement, welches auch in diesem Temperaturbereich guten Dämpfungseigenschaften aufweist, kann diese Schwingung zuverlässig gedämpft und/oder absorbiert werden.

In einer weiteren Ausführungsform ist das Verkleidungsteil aus einem Metall gebildet. Das Verkleidungsteil kann aus einem verzinkten Blech, aus Aluminium, aus Magnesium oder dergleichen gebildet sein. Das Verkleidungsteil kann ein Teil eines Kotflügels oder ein Teil einer Tür des Kraftfahrzeugs sein. Die Ultraschallsensorvorrichtung kann mit einem Verkleidungsteil, welches aus Metall gefertigt ist, verbunden werden. Auch bei einem Verkleidungsteil, welches aus Metall gefertigt ist, kann das Plattendämpfungselement dazu dienen, die Schwingungen des Verkleidungsteils zuverlässig zu dämpfen und/oder zu absorbieren.

Ein erfindungsgemäßes Kraftfahrzeug umfasst zumindest eine erfindungsgemäße Anordnung. Das Kraftfahrzeug ist insbesondere als Personenkraftwagen ausgebildet. Die Anordnung kann beispielsweise einem Fahrerassistenzsystem des Kraftfahrzeugs zugeordnet sein. Ein solches Fahrerassistenzsystem kann beispielsweise ein Parkassistenzsystem, ein System zur Totwinkelüberwachung, ein System zur Abstandshaltung, ein Bremsassistenzsystem oder dergleichen sein.

Die mit Bezug auf die erfindungsgemäße Anordnung vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: eine Ultraschallsensorvorrichtung für ein Kraftfahrzeug in einer Explosionsansicht;
- Fig. 2: eine Anordnung mit der Ultraschallsensorvorrichtung und einem Verkleidungsteil des Kraftfahrzeugs in einer geschnittenen Seitenansicht;
- Fig. 3: die Anordnung gemäß Fig. 2 in einer weiteren Ausführungsform; und
- Fig. 4: die Anordnung gemäß Fig. 2 in einer Perspektivansicht.

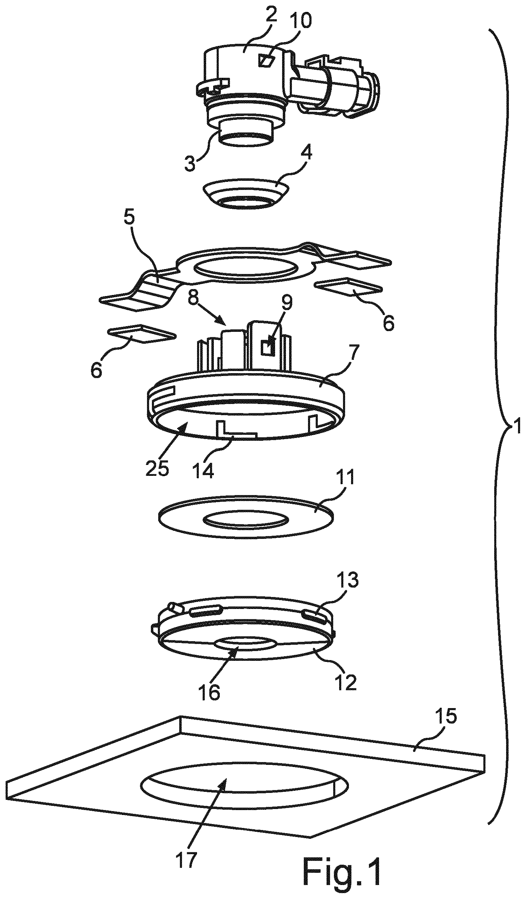

Fig. 1 zeigt eine Ultraschallsensorvorrichtung 1 in einer Explosionsdarstellung. Die Ultraschallsensorvorrichtung 1 umfasst einen Ultraschallsensor 2. Der Ultraschallsensor 2 dient dazu, ein Ultraschallsignal auszusenden und/oder zu empfangen. Der Ultraschallsensor 2 umfasst eine Membran 3, die in dem vorliegenden Ausführungsbeispiel topfförmig ausgebildet ist. Die Membran 3 kann beispielsweise aus Aluminium gefertigt sein. Hinter der Membran 3 ist ein entsprechender Aktor, insbesondere ein piezoelektrisches Element, angeordnet. Das piezoelektrische Element dient dazu, die Membran 3 zum Aussenden des Ultraschallsignals in mechanische Schwingungen zu versetzen. Zudem dient das piezoelektrische Element dazu, eine mechanische Schwingung der Membran 3 zu erfassen. Somit kann beispielsweise ein von dem Ultraschallsensor 2 ausgesendetes Ultraschallsignal, das von einem Objekt reflektiert wurde, erfasst werden.

Ferner umfasst die Ultraschallsensorvorrichtung 1 einen Entkopplungsring 4. Dieser Entkopplungsring 4 ist im Wesentlichen ringförmig ausgebildet. Der Entkopplungsring 4 kann beispielsweise aus einem weichelastischen Material, insbesondere Silikon, gefertigt sein. Der Entkopplungsring 4 umgibt die Membran 3 des Ultraschallsensors 2. Der Entkopplungsring 4 dient zum Entkoppeln der Membran 3 des Ultraschallsensors 2 von einem Stabilisierungselement 12.

Zudem umfasst die Ultraschallsensorvorrichtung 1 ein Halteelement 7. Das Halteelement 7 dient zum Halten des Ultraschallsensors 2. Das Halteelement 7 weist einen Aufnahmeschacht 8 auf, in welchen der Ultraschallsensor 2 eingebracht ist. Der Ultraschallsensor 2 und das Halteelement 7 sind rastend miteinander verbunden. Zu diesem Zweck weist das Halteelement 7 eine entsprechende Öffnung 9 auf, in welche ein Rastelement 10 des Ultraschallsensors einrasten kann.

Darüber hinaus umfasst die Ultraschallsensorvorrichtung 1 das Stabilisierungselement 12. Das Stabilisierungselement 12 kann beispielsweise aus einer Keramik gefertigt sein. Das Stabilisierungselement 12 weist eine Durchgangsöffnung 16 auf, in welcher die Membran 3 des Ultraschallsensors 2 angeordnet ist. Das Stabilisierungselement 12 ist ebenfalls rastend mit dem Halteelement 7 verbunden. Hierzu weist das Stabilisierungselement 12 ein Rastelement 13 auf, das zum Herstellen der rastenden Verbindung zwischen dem Halteelement 7 und dem Stabilisierungselement 12 in ein korrespondierendes Aufnahmeelement 14 des Halteelements 7 greift. Das Stabilisierungselement 12 dient dazu, eine mechanische Schwingung eines Verkleidungsteils 19 eines Kraftfahrzeugs, welches mit der Ultraschallsensorvorrichtung 1 verbunden ist, zu dämpfen oder lokal zu begrenzen.

Des Weiteren umfasst die Ultraschallsensorvorrichtung 1 ein Plattendämpfungselement 15, welches aus einem Butylkautschuk gebildet ist. Das Plattendämpfungselement 15 weist eine Durchgangsöffnung 17 auf, in welche das Stabilisierungselement 12 eingebracht werden kann. Das Plattendämpfungselement 15 dient dazu, eine mechanische Schwingung, insbesondere des Verkleidungsteils 19, zu dämpfen und/oder zu absorbieren. Das Plattendämpfungselement 15 ist adhäsiv bzw. klebend ausgebildet und kann somit auf das Verkleidungsteil 19 des Kraftfahrzeugs angebracht werden.

Die Ultraschallsensorvorrichtung 1 weist außerdem ein Rückschalldämpfungselement 11 auf. Das Rückschalldämpfungselement 11 ist im Wesentlichen ringförmig ausgebildet. Das Rückschalldämpfungselement 11 ist innerhalb des Halteelements 7 angeordnet. Das Halteelement 7 bildet eine Aufnahme 25 aus, in der das Rückschalldämpfungselement 11 insbesondere vollständig angeordnet ist. Das Rückschalldämpfungselement 11 ist ebenfalls aus einem Butylkautschuk gefertigt. Das Rückschalldämpfungselement 11 dient dazu, Schall in eine Richtung, welche der Aussenderichtung des Ultraschallsensors 2 im Wesentlichen entgegengesetzt ist, zu dämpfen. Somit können fehlerhafte Messergebnisse in Folge verhindert werden.

Schließlich umfasst die Ultraschallsensorvorrichtung 1 ein Befestigungselement 5, welches dazu dient, die Ultraschallsensorvorrichtung 1 beim Kleben der Ultraschallsensorvorrichtung 1 auf dem Verkleidungsteil 19 zu halten. In dem vorliegenden Ausführungsbeispiel sind entsprechende Klebepads 6 vorgesehen, mit denen das Befestigungselement 5 auf dem Verkleidungsteil 19 oder auf dem Plattendämpfungselement 15 befestigt werden kann.

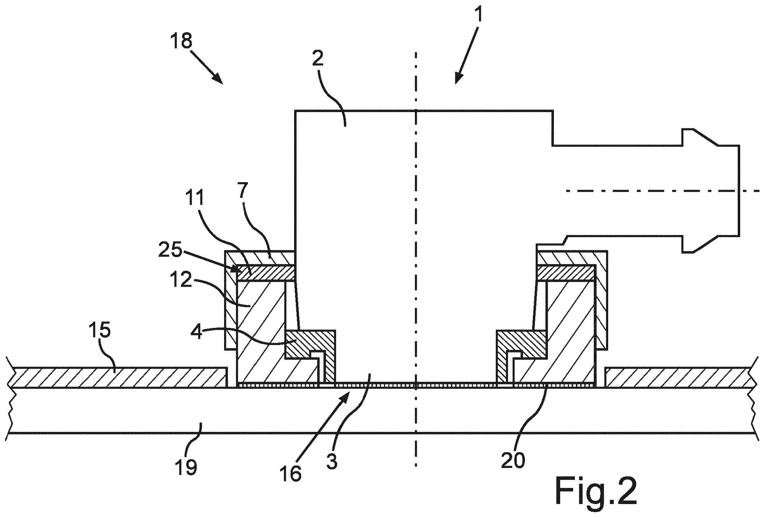

Fig. 2 zeigt eine Anordnung 18 für ein Kraftfahrzeug in einer geschnittenen Seitenansicht. Die Anordnung 18 umfasst die Ultraschalsensorvorrichtung 1 und das Verkleidungsteil 19. Das Verkleidungsteil 19 kann durch ein Karosseriebauteil des Kraftfahrzeugs gebildet sein. Das Verkleidungsteil 19 kann beispielsweise ein Stoßfänger oder ein Teil eines Stoßfängers des Kraftfahrzeugs sein. Das Verkleidungsteil 19 kann aus Kunststoff, insbesondere einem Makroblend®-Material gefertigt sein. Alternativ dazu kann das Verkleidungsteil 19 aus einem Metall gebildet sein.

In dem Ausführungsbeispiel gemäß Fig. 2 ist zu erkennen, dass das Rückschalldämpfungselement 11 innerhalb der Aufnahme 25 des Halteelements 7 angeordnet ist. Weiterhin ist zu erkennen, dass die Ultraschallsensorvorrichtung 1 mit dem Verkleidungsteil 19 verbunden ist. Vorliegend ist die Ultraschallsensorvorrichtung 1 mittels eines Klebstoffs 20 mit dem Verkleidungsteil 19 verbunden.

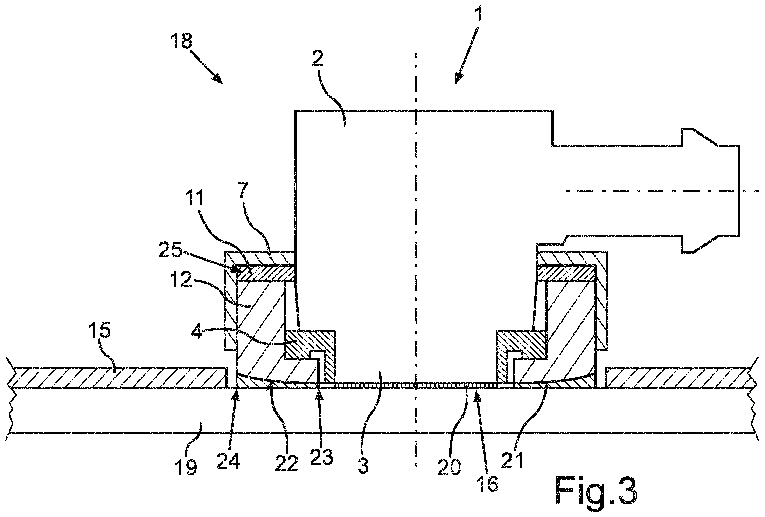

Fig. 3 zeigt eine weitere Ausführungsform der Anordnung 18. Hierbei weist eine Stirnseite 22 des Stabilisierungselements 12, welche dem Verkleidungsteil 19 zugewandt ist, eine vorbestimmte Krümmung auf. Die Stirnseite 22 kann beispielsweise derart ausgestaltet sein, dass der Krümmungsradius etwa 360 mm beträgt. Zwischen dem Verkleidungsteil 19 und dem Stabilisierungselement 12 ist ein Koppelelement 21 angeordnet. Das Koppelelement 21 ist zumindest teilweise aus einem Butylkautschuk gebildet. In einem ersten Bereich 23 der Stirnseite 22, welcher der Durchgangsöffnung 16 bzw. Aussparung zugeordnet ist, weist das Koppelelement 21 eine erste Schichtdicke auf. Die erste Schichtdicke kann geringer als 50 µm sein. Beispielsweise kann die erste Schichtdicke 43 µm betragen. In einem zweiten Bereich 24 der Stirnseite 22, welcher dem Außenumfang des Stabilisierungselements 12 zugeordnet ist, weist das Koppelement 21 eine zweite Schichtdicke auf. Die zweite Schichtdicke hängt von der Krümmung des Stabilisierungselements 12 und der Formgebung des Verkleidungsteils 19 ab. Die zweite Schichtdicke kann beispielsweise 350 µm betragen.

Das Koppelelement 21 ist insbesondere selbstklebend ausgebildet und dient dazu, das Stabilisierungselement 12 an dem Verkleidungsteil 19 zu befestigen. Die Membran 3 des Ultraschallsensors 2 kann mit einem separaten Klebstoff mit dem Verkleidungsteil 19 verbunden sein. Die Verwendung von Butylkautschuk für das Koppelelement 21 weist den Vorteil auf, dass das Material nicht aushärten muss. Somit kann das Stabilisierungselement 12 einfach und kostengünstig auf dem Verkleidungsteil 19 befestigt werden. Ferner dient das Koppelelement 21 zur Dämpfung von Schwingungen. Messungen haben ergeben, dass bei der Verwendung eines Koppelelements 21 aus Butylkautschuk die Ausschwingzeit der Membran 3 deutlich reduziert werden kann. Zudem können Schwingungen der Membran 3 in einem Temperaturbereich zwischen -40° C und 90° C deutlich reduziert werden.

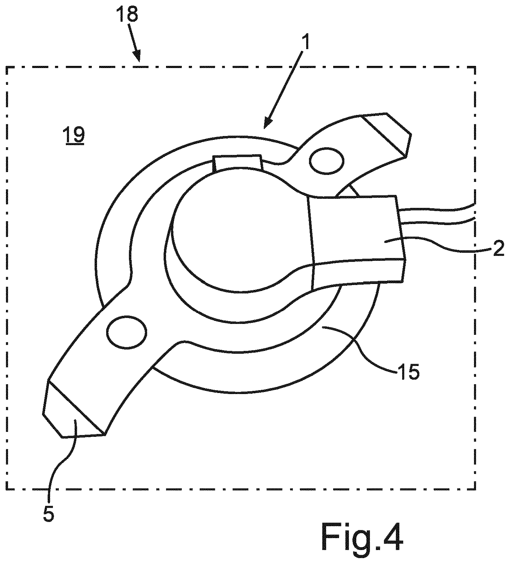

In dem Ausführungsbeispiel gemäß Fig. 4 ist das Plattendämpfungselement 15 im Wesentlichen ringförmig ausgebildet. Das Plattendämpfungselement 15 kann beispielsweise eine Dicke zwischen 0,6 mm und 2 mm aufweisen. Das Plattendämpfungselement 15, das aus einem Butylkautschuk gefertigt ist, weist den Vorteil auf, dass es in einem Temperaturbereich zwischen -40° C und 90 °C gute Dämpfungseigenschaften aufweist. Somit können mechanische Schwingungen des Verkleidungsteils 19, die in Folge des Ultraschallsignals des Ultraschallsensors 2 entstehen, gedämpft oder absorbiert werden. Insbesondere können mechanische Schwingungen des Verkleidungsteils 19, die durch das Stabilisierungselement 12 nicht ausreichend gedämpft werden, zusätzlich von dem Plattendämpfungselement 15 gedämpft werden. Somit kann beispielsweise die Ausschwingzeit der Membran 3 des Ultraschallsensors 2 deutlich reduziert werden. Damit kann verhindert werden, dass sogenannte Überschwinger entstehen, und sogenannte Scheinhindernisse mit dem Ultraschallsensor 2 erfasst werden.

## Patentansprüche

1. Anordnung (18) für ein Kraftfahrzeug mit einer Ultraschallsensorvorrichtung (1) und einem Verkleidungsteil (19) für das Kraftfahrzeug (1), wobei die Ultraschallsensorvorrichtung (1) zur Anordnung hinter dem Verkleidungsteil (19) ausgelegt ist, wobei die Ultraschallsensorvorrichtung (1) einen Ultraschallsensor (2) zum Aussenden und/oder Empfangen eines Ultraschallsignals und ein Plattendämpfungselement (15) zum Absorbieren und/oder Dämpfen einer in Folge des Ultraschallsignals erzeugten Schwingung aufweist, wobei das Plattendämpfungselement (15) in einem Umgebungsbereich des Ultraschallsensors (2) angeordnet ist und wobei der Ultraschallsensor (2) mit dem Verkleidungsteil (19) verbunden ist, wobei die Ultraschallsensorvorrichtung (1) ein Stabilisierungselement (12) mit einer Durchgangsöffnung (16) aufweist, wobei eine Membran (3) des Ultraschallsensors (2) zumindest bereichsweise in der Durchgangsöffnung (16) angeordnet ist,
**dadurch gekennzeichnet, dass**
das Plattendämpfungselement (15) zumindest teilweise aus einem Butylkautschuk besteht und das Plattendämpfungselement (15) auf dem Verkleidungsteil (19) angebracht ist und zwischen dem Verkleidungsteil (19) und dem Stabilisierungselement (12) zumindest bereichsweise ein Koppelelement (21) angeordnet ist, das zumindest teilweise aus einem Butylkautschuk besteht, wobei das Koppelelement (21) ein zum Plattendämpfungselement (15) separates Teil ist.

2. Anordnung (18) nach Anspruch 1,
**dadurch gekennzeichnet, dass**
eine erste Seite und/oder eine der ersten Seite gegenüberliegende, zweite Seite des Plattendämpfungselements (15) adhäsiv ausgebildet ist.

3. Anordnung (18) nach Anspruch 1 oder 2,
**dadurch gekennzeichnet, dass**
die Ultraschallsensorvorrichtung (1) ein Rückschalldämpfungselement (11) zum Dämpfen von Schall in eine Richtung, welche einer Senderichtung des Ultraschallsensors (2) im Wesentlichen entgegengerichtet ist, aufweist, wobei das Rückschalldämpfungselement (11) zumindest teilweise aus dem Butylkautschuk besteht.

4. Anordnung (18) nach einem der vorhergehenden Ansprüche,
**dadurch gekennzeichnet, dass**
eine Stirnseite (22) des Stabilisierungselements (12) eine vorbestimmte Krümmung aufweist.

5. Anordnung (18) nach einem der vorhergehenden Ansprüche,
**dadurch gekennzeichnet, dass**
die Ultraschallsensorvorrichtung (1) ein Halteelement (7) mit einem Aufnahmeschacht (8) aufweist, in welchem der Ultraschallsensor (2) gehalten ist.

6. Anordnung (18) nach Anspruch 5,
**dadurch gekennzeichnet, dass**
das Halteelement (7) eine Aufnahme (25) aufweist und das Rückschalldämpfungselement (11) zumindest bereichsweise in der Aufnahme (25) angeordnet ist.

7. Anordnung (18) nach einem der vorhergehenden Ansprüche,
**dadurch gekennzeichnet, dass**
das Plattendämpfungselement (15) den Ultraschallsensor (2) zumindest bereichsweise umgibt.

8. Anordnung (18) nach einem der vorhergehenden Ansprüche,
**dadurch gekennzeichnet, dass**
das Verkleidungsteil (19) aus einem Kunststoff gebildet ist.

9. Anordnung (18) nach einem der Ansprüche 1 bis 8,
**dadurch gekennzeichnet, dass**
das Verkleidungsteil (19) aus einem Metall gebildet ist.

10. Kraftfahrzeug mit zumindest einer Anordnung (18) nach einem der vorhergehenden Ansprüche.

## Claims

1. Arrangement (18) for a motor vehicle, the arrangement comprising an ultrasonic sensor device (1) and a trim part (19) for the motor vehicle, wherein the ultrasonic sensor device (1) is configured for arrangement behind the trim part (19), wherein the ultrasonic sensor device (1) comprises an ultrasonic sensor (2) for emitting and/or receiving an ultrasonic signal and a plate damping element (15) for absorbing and/or damping a vibration generated as a consequence of the ultrasonic signal, wherein the plate damping element (15) is arranged in an environment of the ultrasonic sensor (2) and wherein the ultrasonic sensor (2) is connected with the trim part (19), wherein the ultrasonic sensor device (1) comprises a stabilization element (12) with a passage opening (16), wherein a membrane (3) of the ultrasonic sensor (2) at least in portions is arranged in the passage opening (16),
**characterized in that**
the plate damping element (15) at least partially consists of a butyl rubber and the plate damping element (15) is attached on the trim part (19) and between the trim part (19) and the stabilization element (12) at least in portions a coupling element (21) is arranged, which at least partially consists of a butyl rubber, wherein the coupling element (21) is a part separate from the plate damping element (15).

2. Arrangement (18) according to claim 1,
**characterized in that**
a first side and/or a second side of the plate damping element (15) opposite the first side is configured to be adhesive.

3. Arrangement (18) according to claim 1 or 2,
**characterized in that**
the ultrasonic sensor device (1) comprises a reflected sound damping element (11) for damping sound in a direction which is substantially reverse to an emitting direction of the ultrasonic sensor (2), wherein the reflected sound damping element (11) at least partially consists of butyl rubber.

4. Arrangement (18) according to any one of the preceding claims,
**characterized in that**
a front side (22) of the stabilization element (12) has a predetermined curvature.

5. Arrangement (18) according to any one of the preceding claims,
**characterized in that**
the ultrasonic sensor device (1) comprises a holding element (7) with a receiving shaft (8), in which the ultrasonic sensor (2) is held.

6. Arrangement (18) according to claim 5,
**characterized in that**
the holding element (7) comprises a socket (25) and the reflected sound damping element (11) is arranged at least in portions in the socket (25).

7. Arrangement (18) according to any one of the preceding claims,
**characterized in that**
the plate damping element (15) surrounds the ultrasonic sensor (2) at least in portions.

8. Arrangement (18) according to any one of the preceding claims,
**characterized in that**
the trim part (19) is formed from a plastic.

9. Arrangement (18) according to any one of claims 1 to 8,
**characterized in that**
the trim part (19) is formed from a metal.

10. Motor vehicle comprising at least one arrangement (8) according to any one of the preceding claims.

## Revendications

1. Agencement (18) pour un véhicule automobile, comprenant un dispositif de capteur à ultrasons (1) et une pièce d'habillage (19) pour le véhicule automobile, le dispositif de capteur à ultrasons (1) étant conçu pour être disposé derrière la pièce d'habillage (19), le dispositif de capteur à ultrasons (1) présentant un capteur à ultrasons (2) pour envoyer et/ou recevoir un signal ultrasonore et un élément d'amortissement à plaque (15) pour absorber et/ou amortir une oscillation générée du fait du signal ultrasonore, l'élément d'amortissement à plaque (15) étant disposé dans une région de l'environnement du capteur à ultrasons (2) et le capteur à ultrasons (2) étant connecté à la pièce d'habillage (19), le dispositif de capteur à ultrasons (1) présentant un élément de stabilisation (12) avec une ouverture de passage (16), une membrane (3) du capteur à ultrasons (2) étant disposée au moins en partie dans l'ouverture de passage (16),
**caractérisé en ce que**
l'élément d'amortissement à plaque (15) se compose au moins en partie d'un caoutchouc butyle et l'élément d'amortissement à plaque (15) est monté sur la pièce d'habillage (19) et un élément d'accouplement (21) est disposé au moins en partie entre la pièce d'habillage (19) et l'élément de stabilisation (12), lequel se compose au moins en partie d'un caoutchouc butyle, l'élément d'accouplement (21) étant une pièce séparée de l'élément d'amortissement à plaque (15).

2. Agencement (18) selon la revendication 1,
**caractérisé en ce**
**qu'**un premier côté et/ou un deuxième côté opposé au premier côté de l'élément d'amortissement à plaque (15) sont réalisés sous forme adhésive.

3. Agencement (18) selon la revendication 1 ou 2,
**caractérisé en ce que**
le dispositif de capteur à ultrasons (1) présente un élément d'atténuation de retour de bruit (11) pour amortir le bruit dans une direction qui est essentiellement opposée à une direction d'émission du capteur à ultrasons (2), l'élément d'atténuation du retour de bruit (11) se composant au moins en partie du caoutchouc butyle.

4. Agencement (18) selon l'une quelconque des revendications précédentes,
**caractérisé en ce**
**qu'**un côté frontal (22) de l'élément de stabilisation (12) présente une courbure prédéterminée.

5. Agencement (18) selon l'une quelconque des revendications précédentes,
**caractérisé en ce que**
le dispositif de capteur à ultrasons (1) présente un élément de retenue (7) avec un puits de réception (8) dans lequel est retenu le capteur à ultrasons (2).

6. Agencement (18) selon la revendication 5,
**caractérisé en ce que**
l'élément de retenue (7) présente un logement (25) et l'élément d'atténuation de retour de bruit (11) est disposé au moins en partie dans le logement (25) .

7. Agencement (18) selon l'une quelconque des revendications précédentes,
**caractérisé en ce que**
l'élément d'amortissement à plaque (15) entoure au moins en partie le capteur à ultrasons (2).

8. Agencement (18) selon l'une quelconque des revendications précédentes,
**caractérisé en ce que**
la pièce d'habillage (19) est formée d'un plastique.

9. Agencement (18) selon l'une quelconque des revendications 1 à 8,
**caractérisé en ce que**
la pièce d'habillage (19) est formée d'un métal.

10. Véhicule automobile comprenant au moins un agencement (18) selon l'une quelconque des revendications précédentes.
